# FASCICULE DE BREVET EUROPEEN

(11) **EP 1 444 103 B1**
(45) Date de publication et mention de la délivrance du brevet: **26.07.2006**
(21) Numéro de dépôt: 02779384.3
(22) Date de dépôt: 20.09.2002
(51) Int. Cl.: B60C 11/12

(54) **BANDE DE ROULEMENT POUR PNEUMATIQUE**
REIFENLAUFFLÄCHE
TYRE TREAD

(30) Priorité: 27.09.2001 FR 0112469
(43) Date de publication de la demande: 11.08.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: MERINO, LOPEZ, José, F-63200 Riom (FR)
(74) Mandataire: Le Cam, Stéphane Georges Elie
(86) Numéro de dépôt international: PCT/EP2002/010560
(87) Numéro de publication internationale: WO 2003/029031

(56) Documents cités:
- EP-A- 1 033 267
- EP-A- 1 123 819
- GB-A- 1 002 317
- US-A- 3 848 651

## Description

L'invention concerne la bande de roulement d'un pneumatique plus particulièrement destiné à rouler sur des sols enneigés, verglacés, ou mouillés.

Une telle bande de roulement est habituellement pourvue d'éléments en reliefs de type nervures ou blocs, séparés les uns des autres dans le sens circonférentiel et/ou dans le sens transversal par des rainures transversales et/ou circonférentielles. La direction transversale est définie comme une direction parallèle à l'axe de rotation du pneumatique ; la direction transversale appartient à un plan méridien. La direction circonférentielle est perpendiculaire à la direction transversale et correspond à la direction longitudinale. Les éléments en reliefs sont définis par une surface formant une partie de la surface de la bande de roulement et au moins une face latérale perpendiculaire à ou oblique par rapport à la surface de roulement. Plus généralement, les éléments en reliefs comportent au moins deux faces, le cas d'une seule face correspondant à des éléments en relief dont la section est arrondie.

Une telle bande de roulement comporte en outre généralement des incisions ou fentes, dont les largeurs non nulles sont très inférieures à celles des rainures précédemment citées. En réalisant une pluralité de découpes débouchant sur la surface de roulement, on crée une pluralité d'arêtes de gomme pour couper la couche d'eau éventuellement présente sur la route, de manière à maintenir le pneumatique en contact avec le sol et à créer des cavités formant éventuellement des conduits destinés à recueillir et à évacuer l'eau présente dans la zone de contact du pneumatique avec la route dès lors qu'elles sont disposées de façon à déboucher en dehors de la zone de contact.

De nombreux types d'incisions ont déjà été proposés en vue d'améliorer l'adhérence du pneumatique sur les sols considérés.

Le document FR 2 418 719 décrit notamment des incisions qui peuvent être normales à la surface de la bande de roulement ou inclinées par rapport à la direction perpendiculaire à ladite surface.

Le document FR 791 250 décrit des incisions présentant un tracé ondulé sur la surface de la bande de roulement.

Toutefois, il apparaît que l'augmentation du nombre de découpes peut conduire à une diminution de la rigidité de la bande de roulement, ce qui a une incidence défavorable sur les performances du pneumatique voire même sur la performance d'adhérence. Par rigidité de la bande de roulement, on entend la rigidité de la bande sous les actions combinées d'efforts de compression et d'efforts de cisaillement dans la région en contact avec la route.

Il est en effet connu que pour améliorer l'adhérence d'un pneumatique sur les sols considérés, il est nécessaire d'optimiser la surface de contact, c'est-à-dire que celle-ci soit la plus importante possible. Pour cela, il est nécessaire d'avoir une souplesse dans le contact avec le sol selon une direction radiale. Par contre, il apparaît que la perte de rigidité, selon la direction longitudinale et éventuellement selon la direction transversale, due à la présence d'un nombre important de découpes ont tendance à diminuer cette surface de contact.

En effet, on observe un basculement des éléments de la sculpture par cisaillement par exemple du fait du couple moteur ou du couple freineur. Ce basculement entraîne une diminution de la surface de contact qui conduit à une diminution de l'adhérence.

Pour remédier à ce problème lié à la perte de rigidité dans les directions longitudinale et éventuellement transversale, il a déjà été proposé de réaliser des lamelles de type autobloquantes, c'est-à-dire des lamelles qui sous l'effet de la compression radiale prennent appui les unes sur les autres de sorte que les rigidités longitudinale et transversale soient augmentées.

Le document EP 0 282 765 décrit notamment des incisions qui présentent des lignes brisées ou ondulées sur toute leur profondeur. Lors d'une compression radiale, le rapprochement des parois des incisions l'une vers l'autre favorise une augmentation de la rigidité longitudinale, l'imbrication desdites parois conduisant à un effet autobloquant.

Le document FR 2 722 144 décrit encore des incisions dont les parois comportent chacune des zones en relief formées de saillies et de cavités destinées comme auparavant à s'imbriquer lors d'une compression radiale. L'imbrication conduit alors à une augmentation des rigidités longitudinale et transversale.

Le document EP 1 033 267 décrit un pneumatique selon le préambule de la revendication 1.

De façon à optimiser la surface de contact il est par ailleurs connu d'utiliser des mélanges caoutchouteux à faible module de façon à diminuer la rigidité radiale. Mais les techniques industrielles utilisées pour l'élaboration de produits semi-finis limitent le choix des modules des mélanges caoutchouteux et ne permettent pas l'utilisation de module optimum en ce qui concerne la compressibilité.

Les inventeurs se sont ainsi donnés pour mission la réalisation d'une bande de roulement, comportant des incisions, pour pneumatique destiné à rouler sur des sols enneigés, verglacés, ou mouillés, dont les performances en terme d'adhérence sont supérieures à celles des produits précédemment évoqués et plus particulièrement dont la surface de contact est optimisée et dont les rigidités longitudinale et transversale sont meilleures que celles évoquées précédemment.

Ce but est atteint selon l'invention par une bande de roulement pour pneumatique comprenant des éléments en relief, comportant au moins une face latérale, au moins un élément en relief étant pourvu d'au moins une incision définie selon un plan moyen, la bande de roulement comportant au moins deux trous latéraux, orientés selon une direction moyenne, traversant ledit élément en relief et sensiblement parallèles au plan moyen de l'incision, lesdits trous débouchant sur au moins une face latérale dudit élément en relief et au moins deux trous latéraux étant situés sur un même côté du plan moyen de l'incision.

Par définition, un trou latéral selon l'invention est un trou traversant un élément en relief qui ne débouche pas sur la surface de roulement dudit élément en relief. En d'autres termes, un trou latéral est séparé de la surface de roulement par de la matière constituant ledit élément en relief. En cas d'usure de la bande de roulement, un trou latéral peut devenir apparent sur la surface de la bande de roulement et n'est plus considéré comme un trou latéral au sens de l'invention à partir de ce moment.

La présence des trous latéraux traversant les éléments en relief permet lors d'une compression radiale d'augmenter la déformation longitudinale et ainsi de favoriser le rapprochement des parois des incisions l'une vers l'autre. Ce rapprochement conduit à un appui plus rapide desdites parois l'une sur l'autre et donc à une augmentation de la rigidité longitudinale, et également à une augmentation de la rigidité transversale.

Selon une variante de réalisation de l'invention, les trous latéraux débouchent à chacune de leurs extrémités sur une face latérale dudit élément en relief.

Une réalisation préférée de l'invention prévoit qu'au moins deux trous latéraux sont répartis sur la hauteur de l'incision.

L'élément en relief est avantageusement pourvu d'au moins deux incisions définies selon des plans moyens parallèles entre eux.

Selon une réalisation préférée de l'invention, la direction moyenne des trous latéraux forme un angle non nul avec la direction circonférentielle de la bande de roulement. Selon cette forme de réalisation de l'invention, il est possible de réaliser industriellement le pneumatique par exemple selon les techniques décrites dans les documents EP 0 925 907. Selon ce type de technique, les trous latéraux sont réalisés par des aiguilles ou doigts qui pénètrent la bande de roulement sur ses faces longitudinales durant la cuisson du pneumatique. Ces aiguilles peuvent dans le cadre de l'invention en outre être supportées et/ou guidées par les éléments qui sont utilisés pour former les rainures longitudinales.

Toutefois, l'invention comprend également le cas de trous latéraux dont la direction moyenne est parallèle à la direction circonférentielle de la bande de roulement et par exemple le cas de trous latéraux dont les orifices débouchent sur des faces transversales des blocs.

Dans une réalisation préférée de l'invention, la direction moyenne des trous latéraux est sensiblement parallèle à la surface de la bande de roulement. Une telle réalisation va permettre au cours de l'usure de la bande de roulement de voir apparaître à la surface de celle-ci de nouvelles arêtes transversales qui viennent s'ajouter à celles correspondant aux incisions. Ces nouvelles arêtes sont issues de l'émergence des trous latéraux sur la surface de la bande de roulement du fait de l'usure de celle-ci. Ces nouvelles arêtes contribuent naturellement à l'efficacité de l'adhérence du pneumatique en présence d'un film d'eau sur le sol.

Dans une variante de réalisation de l'invention plus particulièrement adaptée au cas des pneumatiques destinés à un usage sur des sols enneigés, verglacés, ou mouillés, les incisions sont définies selon un plan moyen sensiblement méridien. Le rôle des incisions étant essentiellement de contribuer à la cassure d'un film d'eau par la présence de leurs arêtes, une disposition sensiblement transversale à la direction de roulement est optimale.

Selon cette variante, les trous latéraux selon l'invention sont alors également réalisés selon la direction transversale.

Selon une réalisation avantageuse de l'invention, la surface de la section des trous latéraux est comprise entre 0,75 et 5 mm². De telles dimensions sont notamment compatibles avec les techniques de réalisation précédemment décrites. Pour des dimensions inférieures, la réalisation serait délicate du fait de la multiplication trop importante du nombre de trous à réaliser pour obtenir l'effet souhaité, ce qui conduirait à un encombrement trop important par les outils nécessaires à la réalisation de ces trous. Au-delà de ces dimensions les trous latéraux pourraient perturber le bon fonctionnement du pneumatique notamment en terme de bruit lorsqu'ils arrivent en surface après usure de la bande de roulement.

La section des trous latéraux peut être de différentes formes et notamment soit polygonale soit elliptique. De préférence, la section du trou est circulaire ; la déformation du trou obtenue lors d'une compression de la bande de roulement conduit à une déformation facilitée dans la direction transversale. Avantageusement encore le diamètre de la section est compris entre 1 et 2,5 mm.

Le volume des trous latéraux est de préférence supérieur à 20 % du volume de l'élément en relief.

Selon une réalisation particulièrement avantageuse de l'invention, les incisions sont de type autobloquantes. Il s'agit par exemple d'incisions telles que celles évoquées précédemment ; Ce sont par exemple des incisions présentant des lignes brisées ou ondulées sur toute leur profondeur. Il peut encore s'agir d'incisions dont les parois comportent chacune des zones en relief formées de saillies et de cavités ou bien encore d'incisions d'épaisseur variable sur leur hauteur. La combinaison selon l'invention de telles incisions avec les trous latéraux va permettre par une augmentation de la déformation longitudinale de la bande de roulement d'accentuer le rapprochement des parois des incisions dont l'effet autobloquant accentue la rigidité, les risques de glissement d'une paroi sur l'autre étant exclus.

De préférence encore selon l'invention, les trous latéraux sont répartis sur une hauteur au moins égale à la profondeur des incisions. Une telle réalisation permet notamment de conserver les propriétés d'adhérence obtenues selon l'invention tout au long de l'utilisation du pneumatique, c'est-à-dire que les propriétés obtenues selon l'invention se conservent malgré l'usure de la bande de roulement.

Une variante de réalisation de l'invention prévoit que dans un élément en relief, et entre deux incisions, les trous latéraux sont répartis selon au moins deux plans sensiblement parallèles entre eux et sensiblement parallèles aux plans moyens des incisions. Une telle répartition des trous va permettre de diminuer le nombre d'incisions et par conséquent tend à améliorer la rigidité longitudinale indépendamment de l'augmentation de la compressibilité. En effet, comme évoqué précédemment, les trous créent en surface de la bande de roulement des arêtes qui remplissent une fonction identique à celles des incisions ; il est donc possible de diminuer le nombre d'incisions sur la bande de roulement, les trous venant se substituer à elles. Le nombre d'incisions diminuant la rigidité longitudinale augmente relativement à un nombre d'incisions plus important.

De préférence encore, les trous latéraux sont décalés radialement d'une colonne à l'autre de sorte que la répartition desdits trous d'un plan à l'autre soit en quinconce. Une telle disposition permet notamment de maintenir un nombre suffisant et quasi-constant d'arêtes sur la surface de roulement. Avantageusement encore, les centres desdits trous latéraux sont distants selon une direction radiale d'une colonne à l'autre d'une longueur inférieure à la somme des rayons desdits trous.

D'autres détails et caractéristiques avantageux de l'invention ressortiront ci-après de la description d'exemples de réalisation de l'invention en référence aux figures 1 à 5, qui représentent,
- figure 1, un schéma d'une vue en élévation selon la direction transversale de la bande de roulement d'un élément de structure selon l'invention,
- figure 2, un schéma d'une vue en élévation selon la direction transversale de la bande de roulement de l'élément de structure de la figure 1 à l'état compressé,
- figure 3, un schéma d'une vue en élévation selon la direction transversale de la bande de roulement d'un second élément de structure selon l'invention,
- figure 4, un schéma d'une vue en élévation selon la direction transversale de la bande de roulement d'un troisième élément de structure selon l'invention,
- figure 5, un schéma d'une vue en élévation selon la direction transversale de la bande de roulement d'un quatrième élément de structure selon l'invention.

Les figures ne sont pas réalisées à l'échelle pour en simplifier la compréhension.

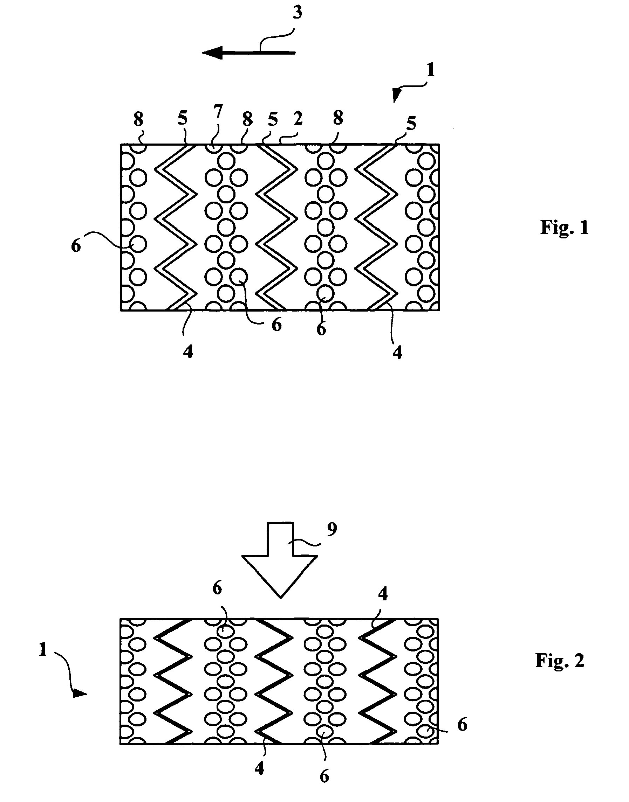

Sur la figure 1, est représentée une partie d'un élément de structure en relief ou bloc 1 de la bande de roulement d'un pneumatique. Seule est représentée la partie supérieure dudit bloc 1, la surface 2 correspondant à la bande de roulement. Habituellement un tel élément en relief ou bloc 1 est délimité par des rainures sensiblement longitudinales et des rainures sensiblement transversales à la direction d'avancement, c'est-à-dire sensiblement parallèles à l'axe de rotation du pneumatique. Ces rainures longitudinales et transversales ont notamment pour fonction de contenir et d'évacuer l'eau qui peut être présente sur le sol.

La figure 1 est une vue selon l'axe de rotation du pneumatique, c'est-à-dire selon la direction transversale à la direction d'avancement représentée par la flèche 3. Le bloc 1 comporte des incisions 4 sur au moins une partie de sa hauteur. La présence de ces incisions est notamment prévue pour créer des arêtes 5 sur la surface de la bande de roulement 2, pour améliorer l'adhérence du pneumatique sur des sols humides, lesdites arêtes supplémentaires permettant de couper le film d'eau à la surface du sol de manière plus fréquente. Les incisions 4 de la figure 1 sont réalisées selon les techniques connues de l'homme du métier pour former des lignes brisées. L'invention n'est bien entendu pas limitée à de telles incisions et elle s'applique à tous types d'incisions. Les incisions représentées ont toutefois l'avantage d'être du type autobloquante et de contribuer à l'augmentation de la rigidité longitudinale. En effet, indépendamment de l'invention, il apparaît que la géométrie de ces incisions conduit à un blocage des parois l'une par l'autre lorsque celles-ci se rapprochent l'une de l'autre du fait du cisaillement du bloc 1, et donc des parois des incisions selon la direction longitudinale, lors de la rotation du pneumatique. Il existe d'autres incisions de type autobloquantes ; il s'agit par exemple d'incisions présentant des lignes ondulées sur toute leur profondeur. Il peut encore s'agir d'incisions dont les parois comportent chacune des zones en relief formées de saillies et de cavités ou bien encore d'incisions d'épaisseur variable sur leur hauteur. Ces différents types d'incisions sont notamment décrits dans les demandes de brevet FR 2 722 144 et FR 2 804 905.

Sur la figure 1 sont également représentés les trous latéraux 6 selon l'invention, qui traversent les blocs 1 de manière sensiblement transversale et parallèle aux incisions 4 et à l'axe de rotation du pneumatique. La présence de ces trous latéraux 6 traversant transversalement les blocs 1 apporte différentes fonctionnalités.

Tout d'abord, les trous latéraux 6 augmentent la compressibilité des blocs 1 ; en conséquence, lorsqu'une zone donnée de la bande de roulement se trouve au contact du sol, pour former l'aire de contact, la présence des trous latéraux 6 dans les différents blocs 1 de ladite zone autorise une déformation longitudinale des blocs 1 plus importante sous la sollicitation due à l'écrasement desdits blocs 1 au contact du sol. On observe ainsi un rapprochement des parois des incisions 4 l'une vers l'autre, ce qui favorise leur contact pour un cisaillement moindre que celui évoqué précédemment. La rigidité longitudinale des blocs 1 est ainsi augmentée et limite en conséquence le cisaillement possible desdits blocs 1. L'aire de contact entre le sol et la bande de roulement est ainsi optimisée, ce qui augmente donc l'adhérence du pneumatique.

La figure 2 illustre la compression de la bande de roulement au contact du sol par la force, représentée par la flèche 9, qui vient en appui sur la surface 2 d'un bloc 1. La présence des trous latéraux 6 et leur déformation permet une déformation de la masse caoutchouteuse qui conduit au rapprochement des parois des incisions 4.

Les trous latéraux 6 sont en outre prévus, selon une répartition choisie sur laquelle il sera revenu ultérieurement, sur une hauteur sensiblement équivalente à la profondeur des incisions 4 de sorte que la fonction qui vient d'être énoncée existe tout au long de l'usage du pneumatique, c'est-à-dire quel que soit son état d'usure.

Par ailleurs, l'usure de la bande de roulement conduit à une autre fonction des trous latéraux 6 ; ceux-ci finissent par apparaître en surface de la bande de roulement, tels que par exemple les trous 7 sur la figure 1 et forment des arêtes 8 en surface de la bande de roulement. Ces arêtes 8 sont sensiblement parallèles aux arêtes 5 formées par les incisions 4 et s'étendent sur toute la largeur des blocs 1 puisque les trous latéraux 6 traversent lesdits blocs 1 et sont sensiblement parallèles aux incisions 4 et à l'axe de rotation du pneumatique. Ces arêtes 8, qui naissent de l'usure de la bande de roulement, viennent s'ajouter aux arêtes 5 et contribuent aux performances d'adhérence du pneumatique. Leur présence va notamment permettre de diminuer le nombre d'incisions 4 et donc d'obtenir des intervalles entre ces incisions plus importants, ce qui autorise un nombre plus important de trous latéraux 6 ou un choix d'une répartition de ces trous latéraux 6 plus étendue.

En outre, mis à part les trous 7, les trous latéraux 6 ne débouchant pas sur la bande de roulement, les risques que lesdits trous latéraux 6 soient obstrués ou bouchés par des saletés sont faibles. Il est ainsi possible de garantir la pérennité de leurs fonctions.

Une dernière fonction des trous latéraux 6 concerne la fabrication du pneumatique. Les techniques usuelles de fabrication consistent au moment de la cuisson du pneumatique à introduire des lamelles par la bande de roulement, lesdites lamelles possédant la forme que l'on souhaite conférer à l'incision. Après cuisson, lesdites lamelles sont retirées avec le moule de cuisson mais il apparaît souvent des difficultés, notamment dans le cas des incisions de type autobloquantes, qui comme dit précédemment sont particulièrement intéressantes en combinaison avec les trous latéraux selon l'invention. En effet, les formes des lamelles de type autobloquantes nécessitent une déformation telle de la masse caoutchouteuse que la présence des trous latéraux 6 devient à nouveau un avantage puisque ceux-ci vont permettre d'obtenir cette déformation sans risque de dégradation du pneumatique. En effet, la réalisation de ces trous latéraux nécessite des outils particuliers, tels que des aiguilles, qui pénètrent la masse caoutchouteuse avant cuisson. Ces outils intervenant sur les faces longitudinales de la bande de roulement, il est nécessaire de les retirer avant l'ouverture du moule qui s'associe au retrait des lamelles ; en conséquence, les trous latéraux sont libres et permettent la déformation de la masse caoutchouteuse au moment du retrait des lamelles.

Par exemple dans le cas des figures 1 et 2, les incisions 6 qui forment des lignes brisées sont en ce qui concerne deux incisions successives 6 sur le bloc 1 en opposition de phase. Une telle configuration est selon les résultats obtenus particulièrement avantageuse pour contribuer à l'augmentation de la rigidité longitudinale mais très délicate à démouler. Les trous latéraux 6 vont permettre de rendre aisé le démoulage.

Concernant la répartition des trous latéraux 6 entre deux incisions 4 du bloc 1 sur les figures 1 et 2, elle est faite selon trois colonnes orientées radialement et donc sensiblement parallèle à la direction principale des incisions, selon une vue en élévation. Le pas entre deux trous latéraux dans une colonne se retrouve sur les trois colonnes. La position des trous latéraux 6 d'une colonne à une autre est telle que sur l'espace encombré par les trous latéraux il ne subsiste pas de bande caoutchouteuse longitudinale continue entre deux incisions 4 ; cette répartition permet d'éviter d'obtenir localement une zone de caoutchouc quasi-indéformable. En d'autres termes, cette répartition permet d'obtenir des déformations longitudinales sensiblement homogènes, tout au moins de manière séquentielle, sur la hauteur du bloc 1, ou plus exactement sur la hauteur correspondant à la profondeur des incisions 4.

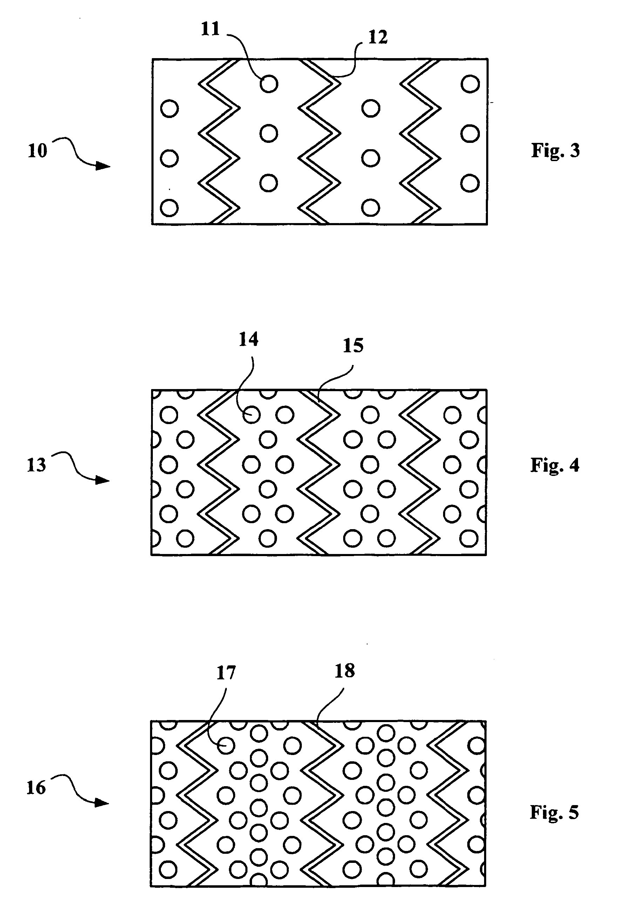

Un tel résultat n'est par exemple pas obtenu avec les configurations des figures 3 et 4. En effet, sur ces figures on peut observer des zones entre deux incisions successives où n'apparaisse aucun trou latéral.

La figure 3 illustre une répartition de trous latéraux 11 entre deux incisions 12 selon une colonne présentant un pas régulier sur une vue en élévation d'une face longitudinale d'un bloc 10. Par contre, cette répartition présente une répartition plus homogène des trous latéraux, c'est-à-dire que les positions relatives des trous latéraux par rapport aux incisions sont semblables pour tous. En d'autres termes, l'influence des trous latéraux 11 sur le rapprochement des parois des incisions 12 est toujours la même pour chaque trou latéral.

La figure 4, qui représente une vue en élévation de la face longitudinale d'un bloc 13 comportant des trous latéraux 14 répartis entre des incisions 15, illustre une répartition selon trois colonnes présentant les mêmes caractéristiques que le cas de la figure 3. En effet, la répartition des trous latéraux 14 est telle que leur influence sur les parois des incisions 15 est semblable à tous les niveaux des incisions.

La figure 5 illustre une répartition des trous latéraux 17 entre des incisions 18 d'un bloc 16, qui combine les caractéristiques des répartitions illustrées par les figures précédentes. La répartition des trous latéraux est ici réalisée selon cinq colonnes de sorte tout d'abord qu'il ne subsiste aucune zone continue de caoutchouc entre deux incisions 18, comme dans le cas des figures 1 et 2.

Ensuite, comme dans le cas des figures 3 et 4, l'influence des trous latéraux sur la compressibilité du bloc 16 et donc sur le rapprochement des parois des incisions 18 est semblable sur toute la profondeur desdites incisions.

Ces différents exemples de répartition des trous latéraux dans un bloc comportant des incisions, selon l'invention, ne doivent pas être considérés de manière limitative ; le nombre de trous latéraux ainsi que leur répartition seront déterminés au cas par cas par l'homme du métier.

D'autre part, les trous latéraux selon l'invention ne sont pas limités à des formes cylindriques ; tout d'abord, comme déjà énoncé précédemment, la section des trous latéraux selon l'invention peut être de tout type. En outre, l'invention prévoit la réalisation de trous latéraux présentant une géométrie hélicoïdale. De telles réalisations de trous latéraux sont particulièrement intéressantes en combinaison avec des incisions dont les parois comportent chacune des zones en relief formées de saillies et de cavités ou bien encore d'incisions d'épaisseur variable sur leur hauteur. La forme hélicoïdale des trous latéraux va permettre d'obtenir une influence sensiblement homogène, selon la direction transversale du bloc ou élément en relief, des trous latéraux sur les incisions. D'un point de vue fabrication, la mise en place des outils donnant naissance à des trous latéraux en forme d'hélice ne pose pas de problème, l'opération se faisant avant la cuisson. Concemant le retrait de ces outils après cuisson, l'invention prévoit avantageusement un mécanisme motorisé qui permet d'effectuer ce retrait avec une rotation desdits outils pour ne pas risquer de dégrader le pneumatique.

L'invention a ainsi décrit la combinaison d'incisions et de trous latéraux traversant, sensiblement parallèles au plan moyen desdites incisions dans un bloc de structure ou élément en relief de la bande de roulement d'un pneu. Il a été mis en évidence que cette combinaison est particulièrement intéressante pour améliorer l'adhérence des pneumatiques sur un sol humide pour différentes raisons. Tout d'abord, la présence des trous latéraux selon l'invention permet d'augmenter la compressibilité de la bande de roulement du pneumatique ; il apparaît donc moins de déformation de ladite bande de roulement dû au cisaillement lors du contact su le sol et donc une augmentation de ladite surface de contact, ce qui conduit à une amélioration de l'adhérence du pneumatique. Par ailleurs, la présence de ces trous latéraux, avantageusement orientés selon une direction parallèle à la surface de la bande de roulement, crée, du fait de l'usure, de nouvelles arêtes en surface de la bande de roulement qui s'associent aux incisions pour couper le film d'eau présent à la surface du sol et donc améliorer l'adhérence du pneumatique.

## Revendications

1. Bande de roulement pour pneumatique comprenant des éléments en relief, comportant au moins une face latérale, au moins un élément en relief étant pourvu d'au moins une incision définie selon un plan moyen, la bande de roulement comportant au moins deux trous latéraux, orientés selon une direction moyenne, les trous débouchant sur au moins une face latérale dudit élément en relief **caractérisée en ce que** les au moins deux trous latéraux traversent ledit élément en relief et sont sensiblement parallèles au plan moyen de l'incision, et **en ce qu**'au moins deux trous latéraux sont situés sur un même côté du plan moyen de l'incision.

2. Bande de roulement selon la revendication 1 **caractérisée en ce que** les trous latéraux débouchent à chacune de leurs extrémités sur une face latérale dudit élément en relief.

3. Bande de roulement selon la revendication 1 ou 2 **caractérisée en ce qu'**au moins deux trous latéraux sont répartis sur la hauteur de l'incision.

4. Bande de roulement selon l'une des revendications 1 à 3 **caractérisée en ce que** l'élément en relief est pourvu d'au moins deux incisions définies selon des plans moyens parallèles entre eux.

5. Bande de roulement selon l'une des revendications précédentes **caractérisée en ce que** la direction moyenne des trous latéraux forme un angle non nul avec la direction circonférentielle de la bande de roulement.

6. Bande de roulement selon l'une des revendications précédentes **caractérisée en ce que** la direction moyenne des trous latéraux est sensiblement parallèle à la surface de la bande de roulement.

7. Bande de roulement selon l'une des revendications précédentes **caractérisée en ce que** les incisions sont définies selon un plan moyen sensiblement méridien.

8. Bande de roulement selon l'une de revendications précédentes **caractérisée en ce que** la surface de la section des trous latéraux est comprise entre 0,75 et 5 mm².

9. Bande de roulement selon l'une des revendications précédentes **caractérisée en ce que** la section des trous latéraux est circulaire et **en ce que** son diamètre est compris entre 1 et 2,5 mm.

10. Bande de roulement selon l'une des revendications précédentes **caractérisée en ce que** le volume des trous latéraux est supérieur à 20 % du volume de l'élément en relief.

11. Bande de roulement selon l'une des revendications précédentes **caractérisée en ce que** les incisions sont de type autobloquantes.

12. Bande de roulement selon l'une des revendications précédentes **caractérisée en ce** les trous latéraux sont répartis sur une hauteur au moins égale à la profondeur des incisions.

13. Bande de roulement selon l'une des revendications précédentes **caractérisée en ce que** dans un élément en relief, et entre deux incisions, les trous latéraux sont répartis selon au moins deux plans sensiblement parallèles entre eux et aux plans moyens des incisions.

14. Bande de roulement selon la revendication 13 **caractérisée en ce que** la répartition des trous latéraux d'un plan à l'autre est en quinconce.

## Claims

1. Tyre tread comprising elements in relief, comprising at least one lateral face, at least one element in relief being provided with at least one incision defined along a mean plane, the tread comprising at least two lateral holes, oriented in a mean direction, the holes opening onto at least one lateral face of said element in relief, **characterised in that** the at least two lateral holes pass through said element in relief and are substantially parallel to the mean plane of the incision and **in that** at least two lateral holes are situated on one and the same side of the mean plane of the incision.

2. Tread according to claim 1, **characterised in that** the lateral holes open at each of their ends onto a lateral face of said element in relief.

3. Tread according to claim 1 or 2, **characterised in that** at least two lateral holes are distributed over the height of the incision.

4. Tread according to one of claims 1 to 3, **characterised in that** the element in relief is provided with at least two incisions defined along mutually parallel mean planes.

5. Tread according to one of the preceding claims, **characterised in that** the mean direction of the lateral holes forms an angle other than zero with the circumferential direction of the tread.

6. Tread according to one of the preceding claims, **characterised in that** the mean direction of the lateral holes is substantially parallel to the surface of the tread.

7. Tread according to one of the preceding claims, **characterised in that** the incisions are defined along a substantially meridian mean plane.

8. Tread according to one of the preceding claims, **characterised in that** the sectional area of the lateral holes is between 0.75 and 5 mm².

9. Tread according to one of the preceding claims, **characterised in that** the section of the lateral holes is circular and **in that** its diameter is between 1 and 2.5 mm.

10. Tread according to one of the preceding claims, **characterised in that** the volume of the lateral holes is greater than 20 % of the volume of the element in relief.

11. Tread according to one of the preceding claims, **characterised in that** the incisions are of the self-locking type.

12. Tread according to one of the preceding claims, **characterised in that** the lateral holes are distributed over a height at least equal to the depth of the incisions.

13. Tread according to one of the preceding claims, **characterised in that**, in an element in relief, and between two incisions, the lateral holes are distributed along at least two planes which are substantially parallel to one another and to the mean planes of the incisions.

14. Tread according to claim 13, **characterised in that** the lateral holes are so distributed that they zigzag from one plane to the other.

## Patentansprüche

1. Laufstreifen für Luftreifen, der Reliefelemente aufweist, die mindestens eine Seitenfläche besitzen, wobei mindestens ein Reliefelement mit mindestens einem gemäß einer Mittelebene festgelegten Einschnitt versehen ist, der Laufstreifen mindestens zwei seitliche Öffnungen aufweist, die gemäß einer mittleren Richtung orientiert sind, die Öffnungen an mindestens einer Seitenfläche des Reliefelements münden, **dadurch gekennzeichnet, dass** zumindest die beiden seitlichen Öffnungen durch das Reliefelement hindurchgehen und in etwa parallel zur Mittelebene des Einschnitts verlaufen, und **dadurch**, **dass** sich mindestens zwei seitliche Öffnungen auf einer Seite der Mittelebene des Einschnitts befinden.

2. Laufstreifen nach Anspruch 1, **dadurch gekennzeichnet, dass** die seitlichen Öffnungen an jedem ihrer Enden an einer Seitenfläche des Reliefelements münden.

3. Laufstreifen nach Anspruch 1 oder 2, **dadurch gekennzeichnet, dass** mindestens zwei seitliche Öffnungen über die Höhe des Einschnitts verteilt sind.

4. Laufstreifen nach einem der Ansprüche 1 bis 3, **dadurch gekennzeichnet, dass** das Reliefelement mit mindestens zwei Einschnitten versehen ist, die gemäß Mittelebenen festgelegt sind, die parallel zueinander verlaufen.

5. Laufstreifen nach einem der vorhergehenden Ansprüche, **dadurch gekennzeichnet, dass** die mittlere Richtung der seitlichen Öffnungen einen von Null verschiedenen Winkel mit der Umfangsrichtung des Laufstreifens bildet.

6. Laufstreifen nach einem der vorhergehenden Ansprüche, **dadurch gekennzeichnet, dass** die mittlere Richtung der seitlichen Öffnungen in etwa parallel zur Lauffläche des Laufstreifens verläuft.

7. Laufstreifen nach einem der vorhergehenden Ansprüche, **dadurch gekennzeichnet, dass** die Einschnitte gemäß einer in etwa meridianen Mittelebene festgelegt sind.

8. Laufstreifen nach einem der vorhergehenden Ansprüche, **dadurch gekennzeichnet, dass** die Querschnittsfläche der seitlichen Öffnungen im Bereich von 0,75 bis 5 mm² liegt.

9. Laufstreifen nach einem der vorhergehenden Ansprüche, **dadurch gekennzeichnet, dass** der Querschnitt der seitlichen Öffnungen rund ist, und **dadurch**, **dass** ihr Durchmesser im Bereich von 1 bis 2,5 mm liegt.

10. Laufstreifen nach einem der vorhergehenden Ansprüche, **dadurch gekennzeichnet, dass** das Volumen der seitlichen Öffnungen mehr als 20 % des Volumens des Reliefelement beträgt.

11. Laufstreifen nach einem der vorhergehenden Ansprüche, **dadurch gekennzeichnet, dass** die Einschnitte vom selbstsperrenden Typ sind.

12. Laufstreifen nach einem der vorhergehenden Ansprüche, **dadurch gekennzeichnet, dass** die seitlichen Öffnungen über eine Höhe von mindestens der Tiefe der Einschnitte verteilt sind.

13. Laufstreifen nach einem der vorhergehenden Ansprüche, **dadurch gekennzeichnet, dass** die seitlichen Öffnungen in einem Reliefelement zwischen zwei Einschnitten gemäß mindestens zwei zueinander und zu den Mittelebenen der Einschnitte in etwa parallelen Ebenen verteilt sind.

14. Laufstreifen nach Anspruch 13, **dadurch gekennzeichnet, dass** die Verteilung der seitlichen Öffnungen von einer Ebene zur anderen versetzt ist.
